# EUROPÄISCHE PATENTSCHRIFT

(11) **EP 3 118 818 B1**
(45) Veröffentlichungstag und Bekanntmachung des Hinweises auf die Patenterteilung: **30.10.2019**
(21) Anmeldenummer: 15177146.6
(22) Anmeldetag: 16.07.2015
(51) Int. Cl.: G07C 9/00, G07C 1/10, G06Q 30/00

(54) **ANWESENHEITSERFASSUNGSVERFAHREN**
PRESENCE DETECTING METHOD
PROCEDE DE DETECTION DE PRESENCE

(43) Veröffentlichungstag der Anmeldung: 18.01.2017
(73) Patentinhaber: Gigaset Communications GmbH, 40549 Düsseldorf (DE)
(72) Erfinder: Ord, Nicholas, 81377 München (DE); Schön, Alexandra, 81379 München (DE); Obermeir, Renee, 83679 Sachsenkam (DE)
(74) Vertreter: Michalski Hüttermann & Partner Patentanwälte mbB

(56) Entgegenhaltungen:
- WO-A1-2009/013526
- US-A1- 2004 124 977
- US-A1- 2015 002 261
- US-A1- 2015 187 153
- VIGIL MARTÍN ET AL: "Integrity, authenticity, non-repudiation, and proof of existence for long-term archiving: A survey", COMPUTERS & SECURITY, Bd. 50, 31. Dezember 2014 (2014-12-31), Seiten 16-32, XP029214488, ISSN: 0167-4048, DOI: 10.1016/J.COSE.2014.12.004
- MAURER U: "New Approaches to Digital Evidence", PROCEEDINGS OF THE IEEE, IEEE. NEW YORK, US, Bd. 92, Nr. 6, 1. Juni 2004 (2004-06-01), Seiten 933-947, XP011112900, ISSN: 0018-9219, DOI: 10.1109/JPROC.2004.827358
- TAKURA A ET AL: "A secure and trusted time stamping authority", INTERNET WORKSHOP, 1999. IWS 99 OSAKA, JAPAN 18-20 FEB. 1999, PISCATAWAY, NJ, USA,IEEE, US, 18. Februar 1999 (1999-02-18), Seiten 88-93, XP010365598, DOI: 10.1109/IWS.1999.810997 ISBN: 978-0-7803-5925-3

## Beschreibung

Die vorliegende Erfindung betrifft ein Anwesenheitserfassungsverfahren zur sicheren Erfassung der Anwesenheit eines tragbaren elektronischen Geräts an dem Ort eines Referenzgeräts.

Verfahren zur Anwesenheitserfassung von Personen sind aus verschiedenen Bereichen bekannt. Von Stadien oder Veranstaltungshallen ist bekannt, dass im Zugangsbereich des Stadions ein zuvor erworbenes Ticket gescannt und entwertet wird. Auf diese Weise wird die Anzahl der Stadionbesucher automatisch erfasst, so dass der Veranstalter Kenntnis davon hat, wie viele Personen Zugang zum Stadion bzw. zur Veranstaltungshalle erhalten haben. Die Besucher des Stadions behalten ihr Ticket als Nachweis dafür, dass sie berechtigterweise Zugang zum Stadion erhalten haben. Eine derartige automatische Erfassung ist somit nur für räumlich geschlossene Bereiche wie Stadien oder Veranstaltungshallen möglich. Zudem ist im Zugangsbereich des Stadions eine Zugangskontrolleinrichtung erforderlich.

Bei Veranstaltungen unter freiem Himmel, die keine räumliche Begrenzung mit einer Zugangskontrolle aufweisen, ist eine Anwesenheitserfassung von Teilnehmern für einen Veranstalter nicht möglich. Die Teilnehmerzahl einer Veranstaltung unter freiem Himmel wird demnach in der Regel vom Veranstalter bzw. von Beobachtern geschätzt, so dass die Teilnehmerzahl in Abhängigkeit des Betrachters sehr stark differiert. Teilnehmer können in der Regel nur durch die Aussage von Augenzeugen oder eines Fotos der Veranstaltung, das zudem den Teilnehmer ablichtet, nachweisen, dass sie an der Veranstaltung teilgenommen haben. Existiert ein derartiges Foto nicht oder kommt das Foto abhanden, ist ein Teilnahmenachweis nach mehreren Jahren in der Regel nur noch sehr schwer belegbar.

Die US2015/0002261 A1 beschreibt ein Verfahren und ein System zum Zertifizieren der Anwesenheit eines Anwenders an einem bestimmten Ort.

Es ist die Aufgabe der Erfindung, ein Anwesenheitserfassungsverfahren zur sicheren Erfassung der Anwesenheit eines tragbaren elektronischen Geräts an dem Ort eines Referenzgeräts bereitzustellen, dass die Erfassung von elektronischen Geräten für Veranstaltungen unter freiem Himmel ermöglicht, die Teilnehmeranzahl in Abhängigkeit der erfassten Geräte ausweist und einen Teilnahmenachweis bereitstellt.

Diese Aufgabe wird durch den Gegenstand des Anspruchs 1 gelöst. Bevorzugte Weiterbildungen der Erfindung sind in den Unteransprüchen angegeben.

Erfindungsgemäß ist somit ein Anwesenheitserfassungsverfahren zur sicheren Erfassung der Anwesenheit eines tragbaren elektronischen Geräts an dem Ort eines Referenzgeräts vorgesehen, umfassend die Schritte:
Einmalige Installation einer auf einem Server installierten Erfassungssoftware auf einem Referenzgerät und auf einem elektronischen Gerät;
Anlegen und/oder Öffnen eines Referenz-Erfassungskontos und eines Teilnehmer-Erfassungskontos in der auf dem Server installierten Erfassungssoftware;
Einmaliges Festlegen von wenigstens einer Erfassungsvoraussetzung zur Erfassung des elektronischen Geräts über das Referenzgerät und Speicherung der wenigstens einen Erfassungsvoraussetzung auf dem Server;
Eingabe eines Referenz-Codes über das Referenzgerät, wobei der Referenz-Code einen einer Referenzperson und/oder einer Referenzveranstaltung eindeutig zuordbaren Identifikations-Code, einen über das Referenzgerät erfassten ersten Standortparameter des Referenzgeräts und/oder einen über das Referenzgerät erfassten ersten atmosphärischen Parameter aufweist;
Eingabe eines Teilnehmer-Codes über das elektronische Gerät, wobei der Teilnehmer-Code einen einer Teilnehmerperson eindeutig zuordbaren Identifikations-Code, einen über das elektronische Gerät erfassten zweiten Standortparameter des elektronischen Geräts und/oder einen über das elektronische Gerät erfassten zweiten atmosphärischen Parameter aufweist;
Erzeugen einer ersten digitalen Zeitstempel-Signatur des Referenz-Codes und/oder einer zweiten digitalen Zeitstempel-Signatur des Teilnehmer-Codes;
Erstellen eines den Referenz-Code und die erste digitale Zeitstempel-Signatur umfassenden signierten Referenz-Codes, und/oder eines den Teilnehmer-Code und die zweite digitale Zeitstempel-Signatur umfassenden signierten Teilnehmer-Codes;
Direkte kommunikationstechnische Kopplung des Referenzgeräts und des elektronischen Geräts und Übermittlung des signierten Teilnehmer-Codes (142) mittels dieser kommunikationstechnischen Kopplung (144) an das Referenzgerät (104) und/oder Übermittlung der signierten Referenz-Codes (130) mittels dieser kommunikationstechnischen Kopplung (144) an das elektronische Gerät (106);
Übermittlung des signierten Referenz-Codes (130) und des signierten Teilnehmer-Codes (142) an den Server (102) und Speicherung des signierten Referenz-Codes (130) im Referenz-Erfassungskonto (112) und des signierten Teilnehmer-Codes (142) im Teilnehmer-Erfassungskonto (132);
Überprüfung des signierten Referenz-Codes und des signierten Teilnehmer-Codes und Abgleich der Erfassungsvoraussetzung mit dem Referenz-Code und dem Teilnehmer-Code;
Erzeugung einer ersten Teilnahmebestätigung und/oder einer zweiten Teilnahmebestätigung bei Erfüllen der Erfassungsvoraussetzung von Referenz-Code und Teilnehmer-Code;
Speicherung der ersten Teilnahmebestätigung im Referenz-Erfassungskonto und der zweiten Teilnahmebestätigung im Teilnehmer-Erfassungskonto.

Die vorstehend genannten Schritte geben keine zwingend einzuhaltende Reihenfolge an. Vielmehr kann die Reihenfolge einzelner Schritte variieren. Vorzugsweise kann der Schritt der direkten kommunikationstechnischen Kopplung von Referenzgerät und elektronischen Gerät vor der Erzeugung der ersten digitalen Zeitstempel-Signatur und/oder der zweiten digitalen Zeitstempel-Signatur erfolgen.

Unter einem Referenzgerät und/oder einem elektronischen Gerät ist vorzugsweise ein internetfähiges tragbares elektronisches Gerät zu verstehen. Besonders bevorzugt sind das Referenzgerät und/oder das elektronische Gerät, ein Notebook, ein Tablet oder ein Smartphone bzw. internetfähiges mobiles Telefon.

Die auf dem Server installierte Erfassungssoftware kann vorzugsweise von dem Referenzgerät und/oder dem elektronischen Gerät heruntergeladen und als Anwendungssoftware bzw. als App auf dem Referenzgerät und/oder dem elektronischen Gerät installiert werden. Bevorzugt ist vorgesehen, dass auf dem Server, dem Referenzgerät und dem elektronischen Gerät die gleiche Erfassungssoftware installiert wird. Die jeweilige auf dem Server, dem elektronischen Gerät und dem Referenzgerät installierte Erfassungssoftware kann vorzugsweise voneinander verschieden sein. Unterschiede können vorzugsweise in unterschiedlichen Versionen der jeweiligen Erfassungssoftware liegen und/oder in der Verwendung unterschiedlicher Betriebssystem begründet sein.

Grundsätzlich wird nicht nur eine Erfassungsvoraussetzung, sondern eine Mehrzahl von Erfassungsvoraussetzungen festgelegt. Unter einer Erfassungsvoraussetzung wird vorzugsweise eine Angabe zum Erfassungsumkreis bzw. zur Erfassungsumgebung verstanden. Besonderes bevorzugt ist eine Erfassungsvoraussetzung ein Angabe zum Erfassungszeitraum, wobei die Angabe vorzugsweise einen oberen und/oder einen unteren Grenzwert aufweist, wodurch ein Erfassungszeitrahmen angegeben wird. Weiterhin ist besonders bevorzugt vorgesehen, dass eine Erfassungsvoraussetzung eine Angabe zu einem Erfassungsevent und/oder zu einem Veranstalter ist. Besonders bevorzugt ist eine Erfassungsvoraussetzung eine Gebühr, wobei die Höhe der Gebühr von einem Veranstalter vorzugsweise über das Referenzgerät festgelegt wird und die Zahlung in Höhe der Gebühr zur Erfassung des elektronischen Geräts von dem Teilnehmer bzw. der Bedienperson des elektronischen Geräts entrichtet sein muss. Wird die Gebühr nicht oder nicht in voller Höhe entrichtet, so wird auch das elektronische Gerät nicht erfasst. Ganz besonderes bevorzugt ist eine Erfassungsvoraussetzung eine Spende, wobei die Erfassungsvoraussetzung der Spende keine ausschließendes Erfassungskriterium darstellt, sondern bei Nichtentrichtung der Spende das elektronische Gerät bei Erfüllen der weiteren Erfassungsvoraussetzungen erfasst wird. Die Spende stellt demnach eine freiwillige Geldwertabgabe dar, die nicht zwingend zur Erfassung des elektronischen Geräts vorausgesetzt wird. Entrichtet der Teilnehmer bzw. die Bedienperson des elektronischen Geräts eine Spende und wird die Spende von dem Referenzgerät und/oder dem Referenzerfassungskonto und/oder dem Server erfasst, so kann dies vorzugsweise dazu führen, dass der Veranstalter für den Spender, nämlich der Teilnehmerperson bzw. der Bedienperson des elektronsichen Geräts, einen Benefit, vorzugsweise die Teilnahme an einem Gewinnspiel oder einer Verlosung, auslobt.

Die kommunikationstechnische Verbindung zwischen dem Server und dem Referenzgerät und/oder dem elektronischen Gerät ist vorzugsweise eine drahtlose Verbindung. Die drahtlose Verbindung ist besonders bevorzugt eine drahtlose Internetverbindung und/oder eine WLAN-Verbindung und/oder eine UMTS-Verbindung und/oder eine LTE-Verbindung.

Ein Standortparameter ist vorzugsweise eine Angabe über die IP-Adresse des Referenzgeräts und/oder des elektronischen Geräts und/oder eine GSM-Zelle des mit dem Referenzgerät bzw. dem elektronischen Gerät verbundenen Sendemasts und/oder aktuelle GPS-Koordinaten des Referenzgeräts bzw. des elektronischen Geräts.

Unter einem atmosphärischen Parameter ist vorzugsweise der Umgebungsdruck bzw. Luftdruck in der Umgebung des elektronischen Geräts bzw. Referenzgeräts und/oder die Umgebungstemperatur des elektronischen Geräts bzw. Referenzgeräts und/oder die Umgebungsfeuchte des elektronischen Geräts bzw. Referenzgeräts zu verstehen.

Die direkte kommunikationstechnische Kopplung zwischen dem Referenzgerät und dem elektronischen Gerät ist eine unmittelbare kommunikationstechnische Verbindung zwischen dem Referenzgerät und dem elektronischen Gerät. Direkt bzw. unmittelbar bedeutet, dass der Datenaustausch zwischen dem Referenzgerät und dem elektronischen Gerät nicht über einen Sendemast oder einen Mobilfunknetzbetreiber erfolgt. Vorzugsweise ist die direkte kommunikationstechnische Kopplung eine kabelgebundene Verbindung zwischen dem Referenzgerät und dem elektronischen Gerät. Besonderes bevorzugt ist die direkte kommunikationstechnische Kopplung eine drahtlose Kopplung, insbesondere eine Near Field Communication (NFC) und/oder eine Infrarot-Verbindung und/oder eine Bluetooth-Verbindung.

Es ist somit ein wesentlicher Punkt der Erfindung, dass Erfassungsvoraussetzungen, vorzugsweise ein Erfassungsumkreis und ein Erfassungszeitrahmen, zur Erfassung des elektronischen Geräts festgelegt und auf dem Server gespeichert werden. Auf diese Weise werden die Rahmenbedingungen zur Erfassung des elektronischen Geräts definiert. Durch Eingabe eines Referenz-Codes auf dem Referenzgerät, der vorzugsweise Identifikationsdaten der Referenzperson und einen Standortparameter des Referenzgeräts aufweist, wird festgelegt, dass sich die Referenzperson mit dem Referenzgerät an dem durch den Standortparameter erfassten Standort befindet. Über die erste digitale Zeitstempel-Signatur des Referenz-Codes wird der Erstellungszeitpunkt des Referenz-Codes festgehalten. Im Ergebnis wird somit ein signierter Referenz-Code erzeugt, der Angaben darüber enthält, dass sich die Referenzperson zu einem bestimmten Zeitpunkt mit dem Referenzgerät an dem durch den Standortparameter erfassten Standort aufgehalten hat. Auf gleiche Weise kann die Erzeugung des signierten Teilnehmer-Codes erfolgen, der Angaben darüber enthält, dass sich die Teilnehmerperson zu einem bestimmten Zeitpunkt mit dem elektronischen Gerät an dem erfassten Standort aufgehalten hat. Infolge der direkten kommunikationstechnischen Kopplung von Referenzgerät und elektronischen Gerät erfolgt ein Abgleich der Erfassungsvoraussetzungen mit den Angaben des signierten Referenz-Codes und/oder des signierten Teilnehmer-Codes. Vorzugsweise wird überprüft, ob die in dem Referenz-Code und/oder dem Teilnehmer-Code angegeben Standortparameter innerhalb des Erfassungsumkreises liegen und/oder, ob der Erstellungszeitpunkt der ersten digitalen Signatur und/oder der zweiten digitalen Signatur innerhalb des Erfassungszeitrahmens liegt. Sofern die Erfassungsvoraussetzungen von dem signierten Referenz-Code und dem signierten Teilnehmer-Code erfüllt sind, werden eine erste Teilnahmebestätigung im Referenz-Erfassungskonto und/oder eine zweite Teilnahmebestätigung im Teilnehmer-Erfassungskonto gespeichert. Auf diese Weise wird ein Anwesenheitserfassungsverfahren angegeben, dass die Erfassung elektronischer Geräte unter freiem Himmel ermöglicht, die Teilnehmeranzahl in Abhängigkeit der erfassten Geräte ausweist und einen Teilnahmenachweis bereitstellt.

Grundsätzlich kann die Erfassungsvoraussetzung in unterschiedlicher Art und Weise bekanntgegeben werden. Vorzugsweise wird die Erfassungsvoraussetzung über Plakate bzw. Flyer kundgegeben. Auf diese Weise können Teilnehmer vor Ort einer Veranstaltung über die Möglichkeit der Erfassung des elektronischen Geräts und des Ausweises einer Teilnahmebestätigung informiert werden. In einer bevorzugten Weiterbildung der Erfindung ist vorgesehen, dass die Erfassungsvoraussetzung über das Referenzgerät und/oder dem Server bereitgestellt wird. Auf diese Weise kann die Erfassungsvoraussetzung verlinkt und vorzugsweise über soziale Netzwerk verteilt werden. Somit können die Erfassungsvoraussetzungen einer Vielzahl von Personen und Teilnehmern elektronisch bereitgestellt werden.

Der Referenz-Code weist in der Regel einen einer Referenzperson und/oder einer Referenzveranstaltung eindeutig zuordbaren Identifikations-Code auf. Dies kann vorzugsweise eine Personalausweisnummer sein, über die die Referenzperson eindeutige identifizierbar ist. Gleiches gilt für den Teilnehmer-Code, über den die Teilnehmerperson eindeutig identifizierbar ist. In einer vorteilhaften Weiterbildung der Erfindung ist vorgesehen, dass über das Referenzgerät ein biometrisches Merkmal der Referenzperson erfasst wird und wenigstens ein Teil des Referenz-Codes das erfasste biometrische Merkmal der Referenzperson aufweist, und/oder über das elektronische Gerät ein biometrisches Merkmal der Teilnehmerperson erfasst wird und wenigstens ein Teil des Teilnehmer-Codes das erfasste biometrische Merkmal des Teilnehmers aufweist. Ein biometrisches Merkmal kann vorzugsweise ein Fingerabdruck und/oder ein Ohrmuschelscan und/oder ein Irisscan und/oder eine Gesichtsaufnahme der Referenzperson bzw. der Teilnehmerperson sein. Auf diese Weise weist vorzugsweise der Teilnehmer-Code neben dem erfassten Standortparameter und/oder dem gemessenen atmosphärischen Parameter zusätzlich das erfasste biometrische Merkmal der Teilnehmerperson auf. Somit enthält der Teilnehmer-Code Information darüber, dass sich zum Zeitpunkt der Erzeugung des Teilnehmer-Codes die Teilnehmerperson mit dem elektronischen Gerät an einem durch das elektronische Gerät erfassten Standort befunden hat.

Die erste digitale Zeitstempel-Signatur und/oder die zweite digitale Zeitstempel-Signatur können eine elektronische Bescheinigung darüber sein, dass die mit dem Zeitstempel signierten Daten, vorzugsweise der Referenz-Code und/oder der Teilnehmer-Code, zum Zeitpunkt der Signatur in der signierten Form vorgelegen haben. Auf diese Weise können die Angaben des Referenz-Codes und/oder des Teilnehmer-Codes mit einem Zeitstempel bescheinigt werden. Gemäß einer bevorzugten Weiterbildung der Erfindung ist vorgesehen, dass das Erzeugen der ersten digitalen Zeitstempel-Signatur die Schritte umfasst:
Erzeugen eines ersten Hashwerts von dem Referenz-Code;
Übermittlung des ersten Hashwerts an einen unabhängigen Zeitstempelserver;
Erfassen der aktuellen Zeitangabe von dem Zeitstempelserver;
Erstellen einer ersten Signatur des ersten Hashwerts und der aktuellen Zeitangabe mit einem Zertifikat des unabhängigen Zeitstempelservers;
Übermittlung der ersten Signatur an das Referenzgerät;
Signieren der ersten Signatur mit einem ersten privaten Schlüssel;
   und/oder
   das Erzeugen der zweiten digitalen Zeitstempel Signatur die Schritte umfasst:
Erzeugen eines zweiten Hashwerts von dem Teilnehmer-Code;
Übermittlung des zweiten Hashwerts an einen unabhängigen Zeitstempelserver;
Erfassen der aktuellen Zeitangabe von dem Zeitstempelserver;
Erstellen einer zweiten Signatur des zweiten Hashwerts und der aktuellen Zeitangabe mit einem Zertifikat des unabhängigen Zeitstempelservers;
Übermittlung der zweiten Signatur an das elektronische Gerät;
Signieren der zweiten Signatur mit einem zweiten privaten Schlüssel.

Auf diese Weise wird nicht der eigentliche Referenz-Code bzw. der Teilnehmer-Code an den Zeitstempelserver übermittelt, sondern der jeweilige Hashwert des Referenz-Codes bzw. des Teilnehmer-Codes. Der jeweilige Hashwert ist eine Art "Fingerabdruck" des Referenz-Codes bzw. des Teilnehmer-Codes, der vorzugsweise durch eine Hashfunktion erzeugt wird und besonders bevorzugt eine alphanumerische Zeichenfolge aufweist. Die Hashfunktion ist eine kryptographische Prüfsumme für den Referenz-Code bzw. den Teilnehmer-Code, um deren Integrität sicherzustellen. Der jeweilige Hashwert wird von dem unabhängigen Zeitstempelserver mit einer Zeitangabe bzw. einem Zeitstempel signiert, wodurch eine erste Signatur für den Referenz-Code und eine zweite Signatur für den Teilnehmer-Code erzeugt wird. Die aktuelle Zeitangabe wird vorzugsweise von einer Funkuhr abgerufen. Abschließend wird die erste Signatur mit einem ersten privaten Schlüssel und die zweite Signatur mit einem zweiten privaten Schlüssel signiert. Der erste private Schlüssel und der zweite private Schlüssel sind vorzugsweise voneinander verschieden und vorzugsweise geheim. Geheim bedeutet, dass der erste private Schlüssel ausschließlich der Referenzperson und der zweite private Schlüssel ausschließlich der Teilnehmerperson bekannt sind. Durch das Signieren der ersten Signatur und/oder der zweiten Signatur mit dem entsprechenden privaten Schlüssel kann die Fälschungssicherheit der ersten Signatur bzw. des Referenz-Codes und/oder der zweiten Signatur bzw. des Teilnehmer-Codes erhöht werden.

Unter dem Signieren der ersten Signatur und/oder der zweiten Signatur mit dem privaten Schlüssel wird vorzugsweise eine Verschlüsselung gemäß dem Verfahren der Elliptischen-Kurven-Kryptographie (ECC) und/oder dem Verfahren nach Riverst, Shamir und Adlemann (RSA) und/oder nach der Pretty Good Privacy (PGP) Verschlüsselung und/oder nach dem Elgamal-Verschlüsselungsverfahren verstanden. Besonders bevorzugt basiert die Verschlüsselung auf dem kryptographischen Verfahren, wobei die Verschlüsselung ganz besonders bevorzugt ein asymmetrisches Verschlüsselungsverfahren ist. Bei einem asymmetrischen Verschlüsselungsverfahren wird bei der Signaturbildung ein anderer Schlüssel eingesetzt als bei der Signaturprüfung. In einer bevorzugten Weiterbildung der Erfindung ist vorgesehen, dass bei der Übermittlung des signierten Referenz-Codes ein erster öffentlicher Schlüssel, und/oder bei der Übermittlung des signierten Teilnehmer-Codes ein zweiter öffentlicher Schlüssel zur jeweiligen Signaturprüfung übermittelt werden. Auf diese Weise kann auf dem Server mit dem ersten öffentlichen Schlüssel der erste Hashcode der ersten Signatur des signierten Referenz-Codes dechiffriert werden. Der dechiffrierte erste Hashcode wird mit einem von dem Referenz-Code erzeugten Hashcode verglichen. Die Übereinstimmung der beiden Hashcodes gilt als Nachweis dafür, dass der Referenzcode nicht verändert bzw. manipuliert wurde. Selbiges gilt für den Teilnehmer-Code, wobei der zweite Hashcode des Teilnehmercodes über den zweiten öffentlichen Schlüssel dechiffriert wird.

Grundsätzlich kann vorgesehen sein, dass über die direkte kommunikationstechnische Kopplung der Teilnehmer-Code und/oder der Referenz-Code übertragen werden und über nur ein Gerät, vorzugsweise dem Referenzgerät oder dem elektronischen Gerät, eine erste digitale Zeitstempel-Signatur des Referenz-Codes und eine zweite digitale Zeitstempel-Signatur des Teilnehmer-Codes erzeugt werden. Wird der Teilnehmer-Code von dem elektronischen Gerät über die direkte kommunikationstechnische Verbindung an das Referenzgerät übermittelt, so wird der Eingang des Teilnehmer-Codes auf dem Referenzgerät zeitlich festgehalten, in dem von dem Teilnehmer-Code eine zweite digitale Zeitstempel-Signatur erzeugt wird. Bedingt durch die direkte kommunikationstechnische Kopplung, die eine bestimmte Nähe zwischen dem elektronischen Gerät und dem Referenzgerät voraussetzt, kann sichergestellt werden, dass sich zum Zeitpunkt der Übertragung des Teilnehmer-Codes an das Referenzgerät und somit auch zum Zeitpunkt der Erstellung der zweiten digitalen Signatur des Teilnehmer-Codes über das bzw. ausgehend von dem Referenzgerät das elektronische Gerät nahe des Referenzgeräts befunden hat. Über einen Abgleich der Erfassungsvoraussetzungen mit dem signierten Teilnehmer-Code und dem signierten Referenz-Code kann überprüft werden, ob auch die weiteren Erfassungsvoraussetzungen erfüllt sind.

Die Erfindung sieht vor, dass über die direkte kommunikationstechnische Kopplung der signierte Referenz-Code und/oder der signierte Teilnehmer-Code übertragen werden. Der signierte Referenz-Code wird vorzugsweise über das bzw. ausgehend vom dem Referenzgerät erzeugt und der signierte Teilnehmer-Code wird vorzugsweise über das bzw. ausgehend von dem elektronischen Gerät erzeugt. Im Zuge der direkten kommunikationstechnischen Kopplung werden der signierente Referenz-Code und/oder der signierte Teilnehmer-Code übertragen. Auf diese Weise wird der Erstellungszeitpunkt des jeweiligen Referenz-Codes und/oder des Teilnehmer-Codes durch die jeweilige digitale Zeitstempel-Signatur festgehalten.

Außerdem ist vorgesehen, dass das Anwesenheitserfassungsverfahren den weiteren Schritt aufweist:
Übermittlung des signierten Referenz-Codes und/oder des signierten Teilnehmer-Codes an den Server und Speicherung des signierten Referenz-Codes im Referenz-Erfassungskonto und/oder des signierten Teilnehmer-Codes im Teilnehmer-Erfassungskonto.
Auf diese Weise kann vorzugsweise der signierte Teilnehmer-Code im Teilnehmer-Erfassungskonto und der signierte Referenz-Code im Referenz-Erfassungskonto nach der jeweiligen Erzeugung im entsprechenden Konto gesichert bzw. hinterlegt werden.

Eine bevorzugte Weiterbildung der Erfindung liegt darin, dass zur Übertragung des Referenz-Codes bzw. signierten Referenz-Codes und/oder des Teilnehmer-Codes bzw. signierten Teilnehmer-Codes über die direkte kommunikationstechnische Kopplung ein Zeitübertragungsrahmen festgelegt wird und die Übertragung des Referenz-Codes bzw. signierten Referenz-Codes und/oder des Teilnehmer-Codes bzw. signierten Teilnehmer-Codes innerhalb des Zeitübertragungsrahmens zu erfolgen hat. Der Zeitübertragungsrahmen ist dabei vorzugsweise derart bemessen, dass die Übertragung des Referenz-Codes bzw. des signierten Referenz-Codes und/oder des Teilnehmer-Codes bzw. des signierten Teilnehmer-Codes ausschließlich über die direkte kommunikationstechnische Verbindung zwischen Referenzgerät und elektronischen Gerät und nicht über eine indirekte kommunikationstechnische Verbindung von dem Referenzgerät und dem elektronischen Gerät erfolgen kann. Vorzugsweise beträgt der Zeitübertragungsrahmen 0 ms ≤ t ≤ 100 ms, besonders bevorzugt 0 ms ≤ t ≤ 50 ms, und ganz besonders bevorzugt 0 ms ≤ t ≤ 20 ms. Auf diese Weise kann sichergestellt werden, dass sich das Referenzgerät und das elektronische Gerät bei Übertragung des Referenz-Codes bzw. des signierten Referenz-Codes und/oder des Teilnehmer-Codes bzw. des signierten Teilnehmer-Codes am gleichen Ort befinden.

Gemäß einer weiteren bevorzugten Weiterbildung der Erfindung ist vorgesehen, dass die Festlegung des Zeitübertragungsrahmens die Schritte umfasst:
Erfassen der Datenübertragungsgeschwindigkeit über die kommunikationstechnische Kopplung zwischen dem Referenzgerät und dem elektronischen Gerät und der Datenübertragungsgeschwindigkeit über die jeweilige indirekte kommunikationstechnische Verbindung des Referenzgeräts und/oder des elektronischen Geräts, wobei die Datenübertragungsgeschwindigkeit über die kommunikationstechnische Kopplung schneller sein muss als über die indirekte kommunikationstechnische Verbindung;
Festlegung eines Grenzwerts zur Datenübertragung, wobei der Grenzwert kleiner als die Datenübertragungsgeschwindigkeit über die jeweilige indirekte kommunikationstechnische Verbindung des Referenzgeräts und des elektronischen Geräts ist.

In einer bevorzugten Weiterbildung der Erfindung ist vorgesehen, dass eine Kopplungsvereinbarung zur Kopplung des Referenzgeräts und des elektronischen Geräts festgelegt wird, wobei die Kopplungsvereinbarung vorzugsweise ein gemeinsames Schütteln von Referenzgerät und elektronischen Gerät ist, und bei einem Erfassen der Kopplungsvereinbarung eine Kopplungsvereinbarungsbestätigung an das Referenz-Erfassungskonto und/oder das Teilnehmer-Erfassungskonto übermittelt wird. Die Kopplungsvereinbarung wird vorzugsweise über das Referenzgerät festgelegt und kann eine optionale und/oder zwingende weitere Erfassungsvoraussetzung zur Erfassung des elektronischen Geräts sein. Vorzugsweise ist die Kopplungsvereinbarung ein gemeinsames Schütteln von Referenzgerät und elektronischen Gerät. Im Anschluss an die direkte kommunikationstechnische Verbindung zwischen dem Referenzgerät und dem elektronischen Gerät werden das elektronische Gerät und das Referenzgerät zur Ausführung der Kopplungsvereinbarung, vorliegend dem gemeinsamen Schütteln von Referenzgerät und elektronischen Gerät, aufgefordert. Sensoren, vorzugsweise Bewegungssensoren innerhalb des jeweiligen elektronischen Geräts und/oder des Referenzgeräts, erfassen die Bewegung von Referenzgerät und/oder elektronischen Gerät. Vorzugsweise werden die erfassten Bewegungsdaten des elektronischen Geräts und/oder des Referenzgeräts an das Teilnehmer-Erfassungskonto und/oder das Referenz-Erfassungskonto übermittelt und auf dem Server miteinander abgeglichen. Stimmen die erfassten Bewegungsdaten des Referenzgeräts und des Teilnehmergeräts überein, bzw. ähneln sich die Bewegungsdaten, kann sichergestellt werden, dass sich bei der Übertragung des signierten Referenz-Codes und/oder des Teilnehmer-Codes das Referenzgerät und das Teilnehmergerät an einem Ort befunden haben.

Eine vorteilhafte Weiterbildung der Erfindung liegt darin, dass die erste Teilnahmebestätigung und/oder die zweite Teilnahmebestätigung aus der Erfassungsvoraussetzung, dem Referenz-Code und dem Teilnehmer-Code generiert werden. Auf diese Weise weist vorzugsweise die zweite Teilnahmebestätigung die wesentlichen Informationen für eine nachträgliche Prüfung auf. Somit kann eine belastbare erste Teilnahmebestätigung und/oder eine belastbare zweite Teilnahmebestätigung generiert werden.

Gemäß einer weiteren bevorzugten Weiterbildung der Erfindung ist vorgesehen, dass die erste Teilnahmebestätigung und/oder die zweite Teilnahmebestätigung digital signiert werden. Die digitale Signatur erfolgt vorzugsweise über das asymmetrische Verschlüsselungsverfahren. Auf diese Weise kann durch Prüfung der Signatur sichergestellt werden, ob die erste Teilnahmebestätigung und/oder die zweite Teilnahmebestätigung verändert wurden.

Eine bevorzugte Weiterbildung der Erfindung liegt darin, dass die zweite Teilnahmebestätigung derart gespeichert und/oder verlinkt wird, dass die zweite Teilnahmebestätigung vorzugsweise über ein soziales Netzwerk und/oder über das elektronische Gerät und/oder über ein sonstiges elektronisches Gerät abrufbar und/oder darstellbar ist. Somit kann die Teilnehmerperson die zweite Teilnahmebestätigung verbreiten und sich zu erkennen geben, an einer bestimmten Veranstaltung teilgenommen zu haben.

Abschließend sieht eine bevorzugte Weiterbildung der Erfindung vor, dass nach Speicherung der zweiten Teilnahmebestätigung im Teilnehmererfassungskonto das elektronische Gerät als Proxy-Referenzgerät fungiert und ein weiteres elektronisches Geräte über das Proxy-Referenzgerät erfasst wird, wobei für das weitere elektronische Gerät ein weiteres Teilnehmer-Erfassungskonto in der Erfassungssoftware angelegt und/oder geöffnet, ein weiterer Teilnehmer-Code eingegeben, eine weitere digitale Zeitstempel-Signatur erzeugt und ein weiterer signierter Teilnehmer-Code generiert werden und das Verfahren folgende Schritte aufweist:
Direkte kommunikationstechnische Kopplung zwischen dem Proxy-Referenzgerät und dem weiteren elektronischen Gerät;
Übertragung des signierten Teilnehmer-Codes und/oder eines weiteren signierten Teilnehmer-Codes über die kommunikationstechnische Kopplung;
Prüfung der zweiten Zeitstempel-Signatur und der weiteren digitalen Zeitstempel-Signatur und Abgleich, ob der Teilnehmer-Code und der weitere Teilnehmer-Code die Erfassungsvoraussetzung erfüllt;
Bei positivem Abgleich, Erzeugung einer ersten Teilnahmebestätigung und/oder einer weiteren zweiten Teilnahmebestätigung;
Speicherung der ersten Teilnahmebestätigung im Referenz-Erfassungskonto und der weiteren zweiten Teilnahmebestätigung im weiteren Teilnehmer-Erfassungskonto.

Auf diese Weise können weitere elektronische Geräte über das bereits erfasste und als Proxy-Referenzgerät fungierende elektronische Gerät erfasst werden, so dass das Erfassen weiterer elektronischer Geräte erleichtert und beschleunigt werden kann. Das Proxy-Referenzgerät bedarf dabei keiner weiteren kommunikationstechnischen Kopplung mit dem Referenzgerät. Vielmehr muss das Proxy-Referenzgerät wie auch das weitere elektronische Gerät mit dem Server kommunikationstechnisch verbindbar sein.

Nachfolgend wird die Erfindung in den Zeichnungen unter Bezugnahme auf die Figuren näher erläutert. In den Zeichnungen zeigt
- Fig. 1:: ein Anwesenheitserfassungsverfahren mit einem Server, einem Referenzgerät und einem elektronischen Gerät gemäß einem bevorzugten Ausführungsbeispiel der Erfindung,
- Fig. 2:: das Anwesenheitserfassungsverfahren mit der Eingabe eines atmosphärischen Parameters als Erfassungsvoraussetzung, gemäß dem bevorzugten Ausführungsbeispiel der Erfindung,
- Fig. 3:: Schritte zum Erzeugen einer ersten digitalen Zeitstempel-Signatur, gemäß dem bevorzugen Ausführungsbeispiel der Erfindung,
- Fig. 4:: das Anwesenheitserfassungsverfahren mit einer verlinkten zweiten Teilnahmebestätigung, gemäß dem bevorzugten Ausführungsbeispiel der Erfindung,
- Fig. 5:: das Anwesenheitserfassungsverfahren, wobei weitere elektronische Geräte über ein als Proxy-Referenzgerät ausgebildetes elektronisches Gerät erfasst werden, gemäß dem bevorzugten Ausführungsbeispiel der Erfindung.

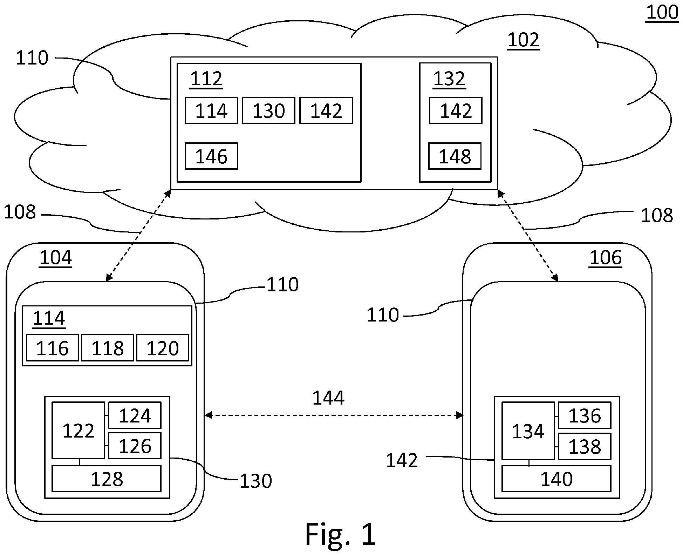

In Fig. 1 ist ein Anwesenheitserfassungsverfahren 100 zur sicheren Erfassung der Anwesenheit eines tragbaren elektronischen Geräts an dem Ort eines Referenzgeräts gezeigt.

Das Anwesenheitserfassungsverfahren 100 umfasst einen Server 102, ein mit dem Server 102 kommunikationstechnisch verbindbares Referenzgerät 104, und ein mit dem Server 102 kommunikationstechnisch verbindbares elektronisches Gerät 106. Das Referenzgerät 104 und das elektronische Gerät 106 sind jeweils als Smartphone ausgebildet. Über eine indirekte kommunikationstechnische Verbindung 108, die eine Internetverbindung ist, werden das elektronische Gerät 106 und das Referenzgerät 104 jeweils mit dem Server 102 kommunikationstechnisch verbunden.

Auf dem Server 102, dem Referenzgerät 104 und dem elektronischen Gerät 106 wird einmalig eine Erfassungssoftware 110 installiert. Betriebssystembedingt kann sich die auf dem Referenzgerät 104 installierte Erfassungssoftware 110 von der auf dem elektronischen Gerät 106 installierten Erfassungssoftware 110 und der auf dem Server 102 installierten Erfassungssoftware 110 unterscheiden.

Über das Referenzgerät 104 wird ein Referenz-Erfassungskonto 112 in der auf dem Server 102 installierten Erfassungssoftware 110 angelegt und geöffnet. Zudem werden über das Referenzgerät 104 Erfassungsvoraussetzungen 114 eingegeben, an den Server 102 übermittelt und in dem Referenz-Erfassungskonto 112 und/oder in der auf dem Server 102 installierten Erfassungssoftware 110 gespeichert. Die Erfassungsvoraussetzungen 114 sind Angaben zu einem Event 116, Angaben zu einem Erfassungsumkreis 118 und Angaben zu einem Erfassungszeitraum 120. Auf diese Weise werden Parameter zur Erfassung eines elektronischen Geräts 106 für einen Event 116 innerhalb eines Erfassungsumkreises 118 zu eine bestimmten Erfassungszeitraum 120 definiert und in dem Referenz-Erfassungskonto 112 bzw. auf dem Server 102 gespeichert.

Weiterhin wird über das Referenzgerät 104 ein Referenz-Code 122 eingegeben. Der Referenz-Code 122 umfasst einen einer Referenzperson eindeutig zuordbaren Identifikations-Code 124 und einen über das Referenzgerät 104 erfassten ersten Standortparameter 126. Der Identifikations-Code 124 ist die Personalausweisnummer der Referenzperson. Auf diese Weise kann die Referenzperson eindeutig über die Personalausweisnummer identifiziert werden. Der erste Standortparameter 126 ist eine Angabe über die aktuellen GPS-Koordinaten des Referenzgeräts 104. Die GPS-Koordinaten werden über das Referenzgerät 104 erfasst und in den Referenz-Code 122 automatisch eingelesen bzw. manuell eingegeben. Somit beinhaltet der Referenz-Code 122 Informationen darüber, dass sich die Referenzperson an einem über das Referenzgerät erfassten Standort aufhält bzw. aufgehalten hat.

Zu dem Referenz-Code 122 wird eine erste digitale Zeitstempel-Signatur 128 erzeugt. Auf diese Weise erhält der Referenz-Code 122 einen Zeitstempel, so dass mit dem Referenz-Code 122 belegt werden kann, dass sich die Referenzperson an dem von dem Referenzgerät 104 erfassten Standort an dem durch den Zeitstempel angegeben Zeitpunkt aufgehalten hat.

Die erste digitale Zeitstempel-Signatur 128 wird an den Referenz-Code 122 angehängt, so dass ein signierter Referenz-Code 130 erzeugt wird, der von dem Referenzgerät 104 über die kommunikationstechnische Verbindung 108 an den Server 102 übermittelt und in dem Referenz-Erfassungskonto 112 gespeichert wird.

Analog zum Referenzgerät 104 wird über das elektronische Gerät 106 eine Teilnehmer-Erfassungskonto 132 in der auf dem Server 102 installierten Erfassungssoftware 110 angelegt und geöffnet. Über das elektronische Gerät 106 wird ein Teilnehmer-Code 134 eingegeben. Der Teilnehmer-Code 134 umfasst einen einer Teilnehmerperson eindeutig zuordbaren Identifikations-Code 136 und einen über das elektronische Gerät 106 erfassten zweiten Standortparameter 138. Der Identifikations-Code 136 ist vorzugsweise die Personalausweisnummer der Teilnehmerperson. Auf diese Weise kann die Teilnehmerperson eindeutig über die Personalausweisnummer identifiziert werden. Der zweite Standortparameter 138 ist eine Angabe über die aktuellen GPS-Koordinaten des elektronischen Geräts 106. Die GPS-Koordinaten werden über das elektronische Gerät 106 erfasst und in den Teilnehmer-Code 134 automatisch eingelesen bzw. manuell eingegeben. Somit beinhaltet der Teilnehmer-Code 134 Informationen darüber, dass sich die Teilnehmerperson an einem über das elektronische Gerät 106 erfassten Standort aufhält bzw. aufgehalten hat.

Von dem Teilnehmer-Code 134 wird eine zweite digitale Zeitstempel-Signatur 140 erzeugt. Auf diese Weise erhält der Teilnehmer-Code 134 einen Zeitstempel, so dass mit dem Teilnehmer-Code 134 belegt werden kann, dass sich die Teilnehmerperson an dem von dem elektronischen Gerät 106 erfassten Standort an dem durch den Zeitstempel angegeben Zeitpunkt aufgehalten hat.

Die zweite digitale Zeitstempel-Signatur 140 wird an den Teilnehmer-Code 134 angehängt, so dass ein signierter Teilnehmer-Code 142 erzeugt wird, der von dem elektronischen Gerät 106 über die kommunikationstechnische Verbindung 108 an den Server 102 übermittelt und in dem Teilnehmer-Erfassungskonto 132 gespeichert wird.

Befinden sich das Referenzgerät 104 und das elektronische Gerät 106 an einem gemeinsamen Ort, werden das Referenzgerät 104 und das elektronische Gerät 106 über eine direkte kommunikationstechnische Kopplung 144 miteinander verbunden. Die direkte kommunikationstechnische Kopplung 144 ist eine unmittelbare kommunikationstechnische Verbindung zwischen dem Referenzgerät 104 und dem elektronischen Gerät 106. Direkt bzw. unmittelbar bedeutet, dass der Datenaustausch zwischen dem Referenzgerät 104 und dem elektronischen Gerät 106 nicht über einen Sendemast oder einen Mobilfunknetzbetreiber erfolgt. Vorliegend ist die direkte kommunikationstechnische Kopplung 144 eine Near Field Communication (NFC).

Über die direkte kommunikationstechnische Kopplung 144 wird der signierte Teilnehmer-Code 142 zunächst an das Referenzgerät übermittelt und dann über die kommunikationstechnische Verbindung 108 an das Referenz-Erfassungskonto 112 übertragen.

Auf dem Server 102 erfolgt eine Überprüfung des signierten Referenz-Codes 130 und des signierten Teilnehmer-Codes 142 und ein Abgleich der Erfassungsvoraussetzung 114 mit dem signierten Referenz-Code 130 und dem signierten Teilnehmer-Code 142. Hierbei wird überprüft, ob der erste Standortparameter 126 und der zweite Standortparameter 138 innerhalb des Erfassungsumkreises 118 liegen und zudem, ob die erste digitale Zeitstempel-Signatur 128 und die zweite digitale Zeitstempel-Signatur 140 innerhalb des Erfassungszeitraums 120 liegen. Werden die Erfassungsvoraussetzungen 114 von dem signierten Referenz-Code 130 und dem signierten Teilnehmer-Code 142 erfüllt, werden eine erste Teilnahmebestätigung 146 und eine zweite Teilnahmebestätigung 148 erzeugt. Die erste Teilnahmebestätigung 146 wird im Referenz-Erfassungskonto 112 und die zweite Teilnahmebestätigung 148 wird im Teilnehmer-Erfassungskonto 132 gespeichert.

Auf diese Weise wird ein Anwesenheitserfassungsverfahren 100 angegeben, dass die Erfassung von elektronischen Geräten 106 für Veranstaltungen unter freiem Himmel ermöglicht, die Teilnehmeranzahl in Abhängigkeit der erfassten elektronischen Geräte 106 ausweist und einen Teilnahmenachweis bereitstellt.

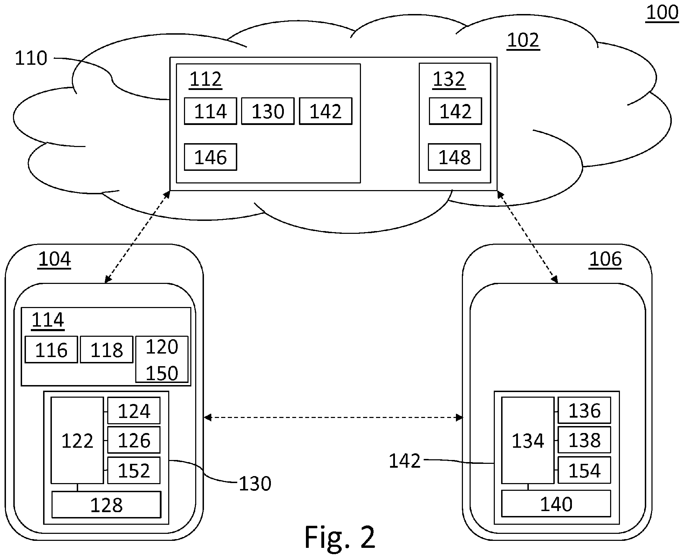

Grundsätzlich können unterschiedliche Erfassungsvoraussetzungen zur Erfassung eines elektronischen Geräts festgelegt werden. Auf Fig. 2 ist ersichtlich, dass die über das Referenzgerät 104 festgelegten Erfassungsvoraussetzungen 114 neben Angaben zum Erfassungsevent 116, Erfassungsumkreis 118 und Erfassungszeitraum 120 zudem eine Angabe zu den atmosphärischen Begebenheiten 150 im Erfassungsumkreis 118 beinhaltet. Die atmosphärische Begebenheiten 150 sind Angaben zur Lufttemperatur und zum Luftdruck. Demnach werden ein Lufttemperaturbereich und ein Luftdruckbereich angegeben und festgelegt.

Der Referenz-Code 122 umfasst neben dem Identifikations-Code 124 der Referenzperson und dem über das Referenzgerät 104 erfassten ersten Standortparameter 126 einen ersten atmosphärischen Parameter 152. Der erste atmosphärische Parameter 152 ist vorliegend ein Wert zum Luftdruck und zur Lufttemperatur in der Umgebung des Referenzgeräts 104, der über das Referenzgerät 104 erfasst wird.

Gleiches gilt für den Teilnehmer-Code 134, der neben dem Identifikations-Code 136 der Teilnehmerperson und dem über das elektronische Gerät 106 erfassten zweiten Standortparameter 138 einen zweiten atmosphärischen Parameter 154 aufweist. Der zweite atmosphärische Parameter 154 ist ein Wert zum Luftdruck und zur Lufttemperatur in der Umgebung des elektronischen Geräts 106, der über das elektronische Gerät 106 erfasst wird.

Im Rahmen der Überprüfung der Erfassungsvoraussetzungen 114 mit dem signierten Referenz-Code 130 und dem signierten Teilnehmer-Code 142 wird neben der Überprüfung der Standortparameter und der Zeitstempel überprüft, ob der erste atmosphärische Parameter 152 und der zweite atmosphärische Parameter 154 die atmosphärischen Erfassungsvoraussetzungen 114 bzw. atmosphärischen Begebenheiten im Erfassungsumkreis erfüllen. Auf diese Weise kann die Manipulationssicherheit des Anwesenheitserfassungsverfahrens 100 erhöht werden.

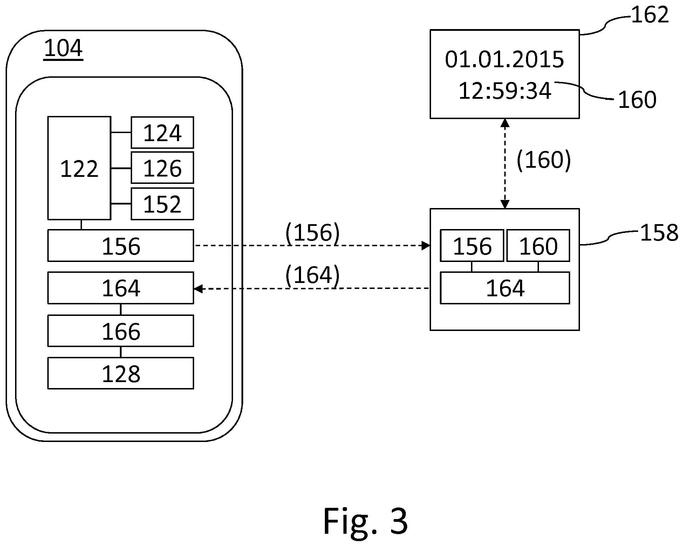

Aus Fig. 3 ist die Erzeugung der ersten digitalen Zeitstempel Signatur 128 von dem Referenz-Code 122 gezeigt. Grundsätzlich sei angemerkt, dass die Erzeugung der zweiten digitalen Zeitstempel-Signatur von dem Teilnehmer-Code analog abläuft.

In einem ersten Schritt wird von dem Referenz-Code 122, der einen Identifikations-Code 124 der Referenzperson, einen durch das Referenzgerät 104 erfassten ersten Standortparameter 126 und einen durch das Referenzgerät 104 erfassten ersten atmosphärischen Parameter 152 aufweist, ein erster Hashwert 156 erzeugt. Der erste Hashwert 156 ist eine Art "Fingerabdruck" des Referenz-Codes 122, der durch eine Hashfunktion erzeugt wird und eine alphanumerische Zeichenfolge aufweist. Die Hashfunktion ist eine kryptographische Prüfsumme des Referenz-Codes 122 um dessen Integrität sicherzustellen.

In einem weiteren Schritt wird der erste Hashwert 156 an einen unabhängigen Zeitstempelserver 158 übermittelt und von dem unabhängigen Zeitstempelserver 158 mit einer Zeitangabe bzw. einem Zeitstempel 160 signiert, wodurch eine erste Signatur 164 erzeugt wird. Die aktuelle Zeitangabe wird hierzu von einer Funkuhr 162 abgerufen. Anschließend wird die erste Signatur 164 an das Referenzgerät 104 übermittelt. Auf dem Referenzgerät 104 wird die erste Signatur 164 in einem weiteren Schritt mit einem ersten privaten Schlüssel 166 signiert. Der erste private Schlüssel 166 ist geheim. Dies bedeutet, dass der erste private Schlüssel 166 ausschließlich der Referenzperson bekannt ist. Auf diese Weise wird die erste digitale Zeitstempel-Signatur 128 erstellt. Über die Signatur des Referenz-Codes 122 bzw. des ersten Hashwerts 156 kann die Fälschungssicherheit des Referenz-Codes 122 erhöht werden, so dass ein sicheres Anwesenheitserfassungsverfahren 100 bereitgestellt werden kann.

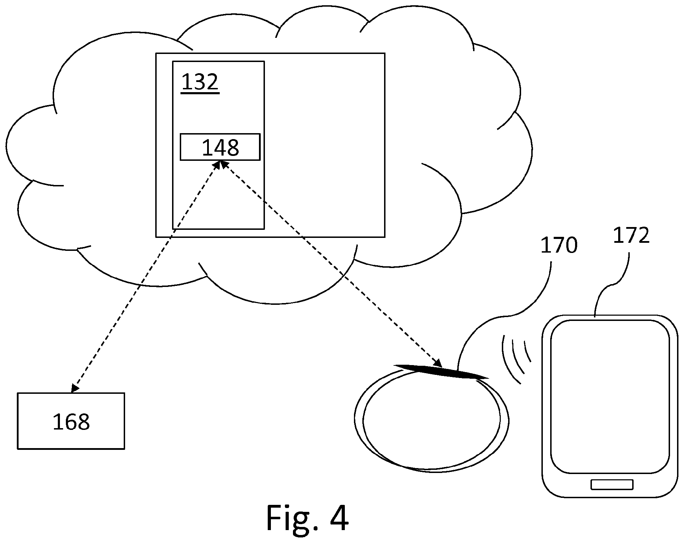

Aus Fig. 4 ist ersichtlich, dass die im Teilnehmer-Erfassungskonto 132 gespeicherte zweite Teilnahmebestätigung 148 mit einem sozialen Netzwerk 168 und mit einem elektronischen Armband 170 verlinkt wird. Durch das Verlinken der zweiten Teilnahmebestätigung 148 mit dem sozialen Netzwerk 168 kann die Teilnehmerperson die zweite Teilnahmebestätigung 148 öffentlich bekannt machen und somit bekannt geben, an einem bestimmten Event teilgenommen zu haben. Das Verlinken der zweiten Teilnahmebestätigung 148 mit dem elektronischen Armband 170 erlaubt der Teilnehmerperson den Teilnahmenachweis für sich zu behalten und auf Anfrage zu teilen. Erst durch das Auslesen des elektronischen Armbands 170 mit einem sonstigen elektronischen Gerät 172, dass vorliegend ein Smartphone ist, kann die zweite Teilnahmebestätigung ausgelesen und angezeigt werden.

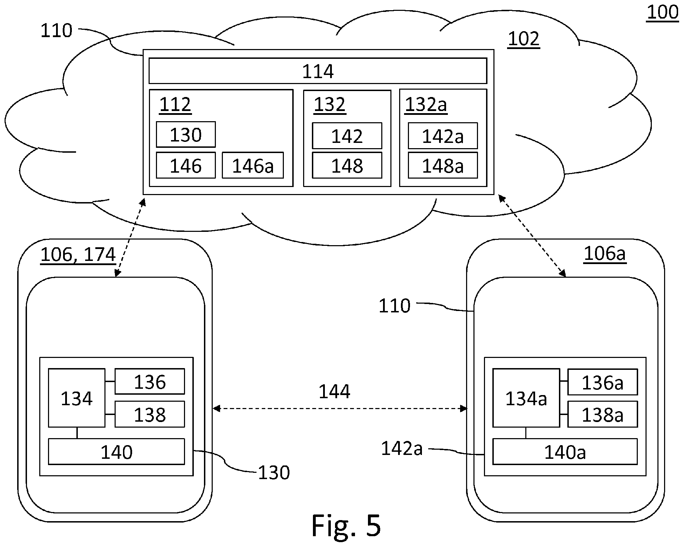

In Fig. 5 ist ein Anwesenheitserfassungsverfahren gezeigt bei dem das bereits erfasste elektronische Gerät 106 als Proxy-Referenzgerät 174 fungiert, so dass weitere elektronische Geräte 106a über eine direkte kommunikationstechnische Kopplung 144 zum Proxy-Referenzgerät 174 erfasst werden können.

Analog zu dem in Fig. 1 beschriebenen Verfahren wird die Erfassungssoftware 110 auf dem weiteren elektronischen Gerät 106a installiert und ein weiteres Teilnehmer-Erfassungskonto 132a wird angelegt bzw. geöffnet. Über das weitere elektronische Gerät 106a wird ein weiterer Teilnehmer-Code 134a eingegeben. Der weitere Teilnehmer-Code 134a umfasst einen einer weiteren Teilnehmerperson eindeutig zuordbaren Identifikations-Code 136a und einen über das weitere elektronische Gerät 106a erfassten weiteren Standortparameter 138a. Von dem weiteren Teilnehmer-Code 134a wird eine weitere digitale Zeitstempel-Signatur 140a erzeugt. Die weitere digitale Zeitstempel-Signatur 140a wird an den weiteren Teilnehmer-Code 134a angehängt, so dass ein weiterer signierter Teilnehmer-Code 142a erzeugt wird.

Zur Anwesenheitserfassung werden das Proxy-Referenzgerät 174 und das weitere elektronische Gerät 106a kommunikationstechnisch gekoppelt 144. Vorliegend ist die kommunikationstechnische Kopplung 144 eine Bluetooth Verbindung ist. Grundsätzlich kann die kommunikationstechnische Kopplung 144 auch eine NFC sein. Über die kommunikationstechnische Kopplung 144 wird der weitere signierte Teilnehmer-Code 142a an das Proxy-Referenzgerät 174 übermittelt und über die kommunikationstechnische Verbindung 108 an den Server 102 weitergeleitet. Für die Funktionsweise des elektronischen Geräts 106 als Proxy-Referenzgerät 174 ist es nicht erforderlich, dass das elektronische Gerät 106 einen direkte kommunikationstechnische Verbindung 144 und/oder indirekte kommunikationstechnische Verbindung 108 zum Referenzgerät 104 aufweist.

Auf dem Server 102 wird überprüft, ob der zweite signierte Teilnehmer-Code 142 und der weitere signierte Teilnehmer-Code 142a die Erfassungsvoraussetzungen 114 erfüllt. Bei einem positivem Abgleich wird eine weitere erste Teilnahmebestätigung 146a erzeugt und in dem Referenz-Erfassungskonto 112 gespeichert. Auf diese Weise wird die Referenzperson bzw. der Veranstalter eines Events darüber informiert, dass weitere Teilnehmer an der Veranstaltung teilgenommen haben. Zudem wird eine weitere Teilnahmebestätigung 148a erzeugt und in dem weiteren Teilnehmer-Erfassungskonto 132a gespeichert. Auf diese Weise erhält der weitere Teilnehmer einen Nachweis für die Teilnahme an dem Event. Somit wird ein Anwesenheitserfassungsverfahren bereitgestellt, das die Erfassung weiterer elektronischer Geräte über bereits erfasste elektronische Geräte ermöglicht. Auf diese Weise kann ein einfaches und schnelles Anmelden verschiedener elektronischer Geräte ermöglicht werden.

**Bezugszeichenliste**

| | |
|---|---|
| Anwesenheitserfassungsverfahren | 100 |
| Server | 102 |
| Referenzgerät | 104 |
| Elektronisches Gerät | 106, 106a |
| Indirekte kommunikationstechnische Verbindung | 108 |
| Erfassungssoftware | 110 |
| Referenz-Erfassungskonto | 112 |
| Erfassungsvoraussetzung | 114 |
| Angabe zu einem Erfassungsevent | 116 |
| Angabe zu einem Erfassungsumkreis | 118 |
| Angabe zu einem Erfassungszeitraum | 120 |
| Referenz-Code | 122 |
| Identifikations-Code Referenzperson | 124 |
| Erster Standortparameter | 126 |
| Erste digitale Zeitstempel-Signatur | 128 |
| Signierter Referenz-Code | 130 |
| Teilnehmer-Erfassungskonto | 132, 132a |
| Teilnehmer-Code | 134, 134a |
| Identifikations-Code Teilnehmerperson | 136, 136a |
| Zweiter Standortparameter | 138, 138a |
| Zweite digitale Zeitstempel-Signatur | 140, 140a |
| Signierter Teilnehmer-Code | 142, 142a |
| Direkte kommunikationstechnische Kopplung | 144 |
| Erste Teilnahmebestätigung | 146, 146a |
| Zweite Teilnahmebestätigung | 148, 148a |
| Atmosphärische Begebenheiten | 150 |
| Erster atmosphärischer Parameter | 152 |
| Zweiter atmosphärischer Parameter | 154 |
| Erster Hashwert | 156 |
| Zeitstempelserver | 158 |
| Zeitangabe, Zeitstempel | 160 |
| Funkuhr | 162 |
| Erste Signatur | 164 |
| Erster privater Schlüssel | 166 |
| Soziales Netzwerk | 168 |
| Elektronisches Armband | 170 |
| Sonstiges elektronisches Gerät | 172 |
| Proxy-Referenzgerät | 174 |

## Patentansprüche

1. Anwesenheitserfassungsverfahren (100), zur sicheren Erfassung der Anwesenheit eines tragbaren elektronischen Geräts (106) an dem Ort eines Referenzgeräts (104), umfassend die Schritte:
Einmalige Installation einer auf einem Server (102) installierten Erfassungssoftware (110) auf einem Referenzgerät (104) und auf einem elektronischen Gerät (106);
Anlegen und/oder Öffnen eines Referenz-Erfassungskontos (112) und eines Teilnehmer-Erfassungskontos (132) in der auf dem Server (102) installierten Erfassungssoftware (110);
Einmaliges Festlegen von wenigstens einer Erfassungsvoraussetzung (114) zur Erfassung des elektronischen Geräts (106) über das Referenzgerät (104) und Speicherung der wenigstens einen Erfassungsvoraussetzung (114) auf dem Server (102);
Eingabe eines Referenz-Codes (122) über das Referenzgerät (104), wobei der Referenz-Code (122) einen einer Referenzperson und/oder einer Referenzveranstaltung eindeutig zuordbaren Identifikations-Code (124), einen über das Referenzgerät (104) erfassten ersten Standortparameter (126) des Referenzgeräts (104) und/oder einen über das Referenzgerät (104) erfassten ersten atmosphärischen Parameter (152) aufweist;
Eingabe eines Teilnehmer-Codes (134) über das elektronische Gerät (106), wobei der Teilnehmer-Code (134) einen einer Teilnehmerperson eindeutig zuordbaren Identifikations-Code (136), einen über das elektronische Gerät (106) erfassten zweiten Standortparameter (138) des elektronischen Geräts (106) und/oder einen über das elektronische Gerät (106) erfassten zweiten atmosphärischen Parameter (154) aufweist;
Erzeugen einer ersten digitalen Zeitstempel-Signatur (128) des Referenzcodes (122) und einer zweiten digitalen Zeitstempel-Signatur (140) des Teilnehmer-Codes (134);
Erstellen eines den Referenz-Code (122) und die erste digitale Zeitstempel-Signatur (128) umfassenden signierten Referenz-Codes (130), und eines den Teilnehmer-Code (134) und die zweite digitale Zeitstempel-Signatur (140) umfassenden signierten Teilnehmer-Codes (142);
Direkte kommunikationstechnische Kopplung (144) des Referenzgeräts (104) und des elektronischen Geräts (106) und Übermittlung des signierten Teilnehmer-Codes (142) mittels dieser kommunikationstechnischen Kopplung (144) an das Referenzgerät (104) und/oder Übermittlung der signierten Referenz-Codes (130) mittels dieser kommunikationstechnischen Kopplung (144) an das elektronische Gerät (106);
Übermittlung des signierten Referenz-Codes (130) und des signierten Teilnehmer-Codes (142) an den Server (102) und Speicherung des signierten Referenz-Codes (130) im Referenz-Erfassungskonto (112) und des signierten Teilnehmer-Codes (142) im Teilnehmer-Erfassungskonto (132);Überprüfung des signierten Referenz-Codes (130) und des signierten Teilnehmer-Codes (142) und Abgleich der Erfassungsvoraussetzung (114) mit dem Referenz-Code (120) und dem Teilnehmer-Code (134);
Erzeugung einer ersten Teilnahmebestätigung (146) und einer zweiten Teilnahmebestätigung (148) bei Erfüllen der Erfassungsvoraussetzung (114) von dem Referenz-Code (122) und dem Teilnehmer-Code (134);
Speicherung der ersten Teilnahmebestätigung (146) im Referenz-Erfassungskonto (112) und der zweiten Teilnahmebestätigung (148) im Teilnehmer-Erfassungskonto (132).

2. Verfahren nach Anspruch 1, **dadurch gekennzeichnet, dass** die Erfassungsvoraussetzung (114) über das Referenzgerät (104) und/oder den Server (102) bereitgestellt wird.

3. Verfahren nach einem der Ansprüche 1 oder 2, **dadurch gekennzeichnet, dass**
über das Referenzgerät (104) ein biometrisches Merkmal der Referenzperson erfasst wird und wenigstens ein Teil des Referenz-Codes (122) das erfasste biometrische Merkmal der Referenzperson aufweist, und/oder
über das elektronische Gerät (106) ein biometrisches Merkmal der Teilnehmerperson erfasst wird und wenigstens ein Teil des Teilnehmer-Codes (134) das erfasste biometrische Merkmal des Teilnehmers aufweist.

4. Verfahren nach Anspruch einem der vorhergehenden Ansprüche, **dadurch gekennzeichnet, dass** das Erzeugen der ersten digitalen Zeitstempel-Signatur (128) die Schritte umfasst:
Erzeugen eines ersten Hashwerts (156) von dem Referenz-Code (122);
Übermittlung des ersten Hashwerts (156) an einen unabhängigen Zeitstempelserver (158);
Erfassen der aktuellen Zeitangabe (160) von dem Zeitstempelserver (158);
Erstellen einer ersten Signatur (164) des ersten Hashwerts (156) und der aktuellen Zeitangabe (160) mit einem Zertifikat des unabhängigen Zeitstempelservers (158);
Übermittlung der ersten Signatur (164) an das Referenzgerät (104);
Signieren der ersten Signatur (164) mit einem ersten privaten Schlüssel (166);
und/oder
das Erzeugen der zweiten digitalen Zeitstempel-Signatur (140) die Schritte umfasst:
Erzeugen eines zweiten Hashwerts von dem Teilnehmer-Code;
Übermittlung des zweiten Hashwerts an einen unabhängigen Zeitstempelserver;
Erfassen der aktuellen Zeitangabe von dem Zeitstempelserver;
Erstellen einer zweiten Signatur des zweiten Hashwerts und der aktuellen Zeitangabe mit einem Zertifikat des unabhängigen Zeitstempelservers;
Übermittlung der zweiten Signatur an das elektronische Gerät;
Signieren der zweiten Signatur mit einem zweiten privaten Schlüssel.

5. Verfahren nach einem der vorhergehenden Ansprüche, **dadurch gekennzeichnet, dass** bei der Übermittlung des signierten Referenz-Codes (130) ein erster öffentlicher Schlüssel, und/oder bei der Übermittlung des signierten Teilnehmer-Codes (142) ein zweiter öffentlicher Schlüssel zur jeweiligen Signaturprüfung übermittelt werden.

6. Verfahren nach einem der vorhergehenden Ansprüche, **dadurch gekennzeichnet, dass** zur Übertragung des signierten Referenz-Codes (130) und/oder des signierten Teilnehmer-Codes (142) über die direkte kommunikationstechnische Kopplung (144) ein Zeitübertragungsrahmen festgelegt wird und die Übertragung des signierten Referenz-Codes (130) und/oder des signierten Teilnehmer-Codes (142) innerhalb des Zeitübertragungsrahmens zu erfolgen hat.

7. Verfahren nach Anspruch 6, **dadurch gekennzeichnet, dass** die Festlegung des Zeitübertragungsrahmens die Schritte umfasst:
Erfassen der Datenübertragungsgeschwindigkeit über die kommunikationstechnische Kopplung (144) zwischen dem Referenzgerät (104) und dem elektronischen Gerät (106) und der Datenübertragungsgeschwindigkeit über die jeweilige indirekte kommunikationstechnische Verbindung (108) des Referenzgeräts (104) und/oder des elektronischen Geräts (106), wobei die Datenübertragungsgeschwindigkeit über die kommunikationstechnische Kopplung (144) schneller sein muss als über die indirekte kommunikationstechnische Verbindung (108);
Festlegung eines Grenzwerts zur Datenübertragung, wobei der Grenzwert kleiner als die Datenübertragungsgeschwindigkeit über die jeweilige indirekte kommunikationstechnische Verbindung (108) des Referenzgeräts (104) und des elektronischen Geräts (106) ist.

8. Verfahren nach einem der vorhergehenden Ansprüche, **dadurch gekennzeichnet, dass** eine Kopplungsvereinbarung zur Kopplung des Referenzgeräts (104) und des elektronischen Geräts (106) festgelegt wird, wobei die Kopplungsvereinbarung vorzugsweise ein gemeinsames Schütteln von Referenzgerät (104) und elektronischen Gerät (106) ist, und bei einem Erfassen der Kopplungsvereinbarung eine Kopplungsvereinbarungsbestätigung an das Referenz-Erfassungskonto (112) und/oder das Teilenehmer-Erfassungskonto (132) übermittelt wird.

9. Verfahren nach einem der vorhergehenden Ansprüche, **dadurch gekennzeichnet, dass** die erste Teilnahmebestätigung (146) und/oder die zweite Teilnahmebestätigung (148) aus der Erfassungsvoraussetzung (114), dem Referenz-Code (122) und dem Teilnehmer-Code (134) generiert werden.

10. Verfahren nach einem der vorhergehenden Ansprüche, **dadurch gekennzeichnet, dass** die erste Teilnahmebestätigung (146) und/oder die zweite Teilnahmebestätigung (148) digital signiert werden.

11. Verfahren nach einem der vorhergehenden Ansprüche, **dadurch gekennzeichnet, dass** die zweite Teilnahmebestätigung (148) derart gespeichert und/oder verlinkt wird, dass die zweite Teilnahmebestätigung (148) vorzugsweise über ein soziales Netzwerk (168) und/oder über das elektronische Gerät (106) und/oder über ein sonstiges elektronisches Gerät (172) abrufbar und/oder darstellbar ist.

12. Verfahren nach einem der vorhergehenden Ansprüche, **dadurch gekennzeichnet, dass** nach Speicherung der zweiten Teilnahmebestätigung (148) im Teilnehmererfassungskonto (132) das elektronische Gerät (106) als Proxy-Referenzgerät (174) fungiert und ein weiteres elektronisches Geräte (106a) über das Proxy-Referenzgerät (174) erfasst wird, wobei für das weitere elektronische Gerät (106a) ein weiteres Teilnehmer-Erfassungskonto (132a) in der Erfassungssoftware (110) angelegt und/oder geöffnet wird, ein weiterer Teilnehmer-Code (134a) eingegeben, eine weitere digitale Zeitstempel-Signatur (140a) erzeugt und ein weiterer signierter Teilnehmer-Code 142a generiert werden und das Verfahren folgende Schritte aufweist:
Direkte kommunikationstechnische Kopplung (144) zwischen dem Proxy-Referenzgerät (174) und dem weiteren elektronischen Gerät (106a);
Übertragung des signierten Teilnehmer-Codes (142) und/oder eines weiteren signierten Teilnehmer-Codes (142a) über die kommunikationstechnische Kopplung (144);
Prüfung der zweiten Zeitstempel-Signatur (140) und der weiteren digitalen Zeitstempel-Signatur (140a) und Abgleich, ob der Teilnehmer-Code (134) und der weitere Teilnehmer-Code (134a) die Erfassungsvoraussetzung (114) erfüllt;
Bei positivem Abgleich, Erzeugung einer weiteren ersten Teilnahmebestätigung (146) und/oder einer weiteren zweiten Teilnahmebestätigung (148a);
Speicherung der ersten Teilnahmebestätigung (146a) im Referenz-Erfassungskonto (112) und der weiteren zweiten Teilnahmebestätigung (148a) im weiteren Teilnehmer-Erfassungskonto (132).

## Claims

1. A presence detection method (100) for reliably detecting the presence of a portable electronic device (106) at the site of a reference device (104), comprising the following steps:
installing, on a one-time basis, detection software (110), which is installed on a server (102), on a reference device (104) and on an electronic device (106);
setting up and/or opening a reference detection account (112) and a participant detection account (132) in the detection software (110) installed on the server (102);
establishing, on a one-time basis, at least one detection requirement (114) for detecting the electronic device (106) via the reference device (104) and storing the at least one detection requirement (114) on the server (102);
entering a reference code (122) via the reference device (104), wherein the reference code (122) comprises an identification code (124) unambiguously assignable to a reference person and/or a reference event, a first location parameter (126) of the reference device (104) detected via the reference device (104) and/or a first atmospheric parameter (152) detected via the reference device (104);
entering a participant code (134) via the electronic device (106), wherein the participant code (134) comprises an identification code (136) unambiguously assignable to a participating person, a second location parameter (138) of the electronic device (106) detected via the electronic device (106) and/or a second atmospheric parameter (154) detected via the electronic device (106);
generating a first digital time stamp signature (128) of the reference code (122) and a second digital time stamp signature (140) of the participant code (134);
creating a signed reference code (130) comprising the reference code (122) and the first digital time stamp signature (128), and a signed participant code (142) comprising the participant code (134) and the second digital time stamp signature (140);
directly coupling (144), in terms of communication, the reference device (104) and the electronic device (106), and transmitting the signed participant code (142) by means of this communication coupling (144) to the reference device (104) and/or transmitting the signed reference code (130) by means of this communication coupling (144) to the electronic device (106);
transmitting the signed reference code (130) and the signed participant code (142) to the server (102), and storing the signed reference code (130) in the reference detection account (112) and the signed participant code (142) in the participant detection account (132);
checking the signed reference code (130) and the signed participant code (142), and comparing the detection requirement (114) to the reference code (120) and the participant code (134);
generating a first participation confirmation (146) and a second participation confirmation (148) when the detection requirement (114) is met by the reference code (122) and the participant code (134); and
storing the first participation confirmation (146) in the reference detection account (112) and the second participation confirmation (148) in the participant detection account (132).

2. The method according to claim 1, **characterized in that** the detection requirement (114) is provided via the reference device (104) and/or the server (102).

3. The method according to either claim 1 or 2, **characterized in that**
a biometric feature of the reference person is detected via the reference device (104), and at least a portion of the reference code (122) comprises the detected biometric feature of the reference person; and/or
a biometric feature of the participating person is detected via the electronic device (106), and at least a portion of the participant code (134) comprises the detected biometric feature of the participant.

4. The method according to any one of the preceding claims, **characterized in that** the generation of the first digital time stamp signature (128) comprises the following steps:
generating a first hash value (156) of the reference code (122);
transmitting the first hash value (156) to an independent time stamp server (158);
detecting the current time information (160) from the time stamp server (158)
creating a first signature (164) of the first hash value (156) and the current time information (160) with a certificate of the independent time stamp server (158);
transmitting the first signature (164) to the reference device (104);
signing the first signature (164) with a first private key (166); and/or
the generation of the second digital time stamp signature (140) comprises the following steps:
generating a second hash value of the participant code;
transmitting the second hash value to an independent time stamp server;
detecting the current time information from the time stamp server;
creating a second signature of the second hash value and the current time information with a certificate of the independent time stamp server;
transmitting the second signature to the electronic device; and
signing the second signature with a second private key.

5. The method according to any one of the preceding claims, **characterized in that** a first public key is transmitted during the transmission of the signed reference code (130), and/or a second public key is transmitted during the transmission of the signed participant code (142), for checking the respective signature.

6. The method according to any one of the preceding claims, **characterized in that** a transmission time frame is established for transmitting the signed reference code (130) and/or the signed participant code (142) via the direct communication coupling (144), and the transmission of the signed reference code (130) and/or of the signed participant code (142) is to take place within the transmission time frame.

7. The method according to claim 6,
**characterized in that** the establishment of the transmission time frame comprises the following steps:
detecting the data transmission rate via the communication coupling (144) between the reference device (104) and the electronic device (106), and the data transmission rate via the respective indirect communication link (108) of the reference device (104) and/or of the electronic device (106), wherein the data transmission rate via the communication coupling (144) must be faster than via the indirect communication link (108); and
establishing a limit value for the data transmission, wherein the limit value is smaller than the data transmission rate via the respective indirect communication link (108) of the reference device (104) and of the electronic device (106).

8. The method according to any one of the preceding claims, **characterized in that** a coupling agreement for coupling the reference device (104) and the electronic device (106) is established, wherein the coupling agreement is preferably a joint shaking of the reference device (104) and of the electronic device (106), and a coupling agreement confirmation is transmitted to the reference detection account (112) and/or the participant detection account (132) when the coupling agreement is detected.

9. The method according to any one of the preceding claims,
**characterized in that** the first participation confirmation (146) and/or the second participation confirmation (148) are generated from the detection requirement (114), the reference code (122) and the participant code (134).

10. The method according to any one of the preceding claims, **characterized in that** the first participation confirmation (146) and/or the second participation confirmation (148) are digitally signed.

11. The method according to any one of the preceding claims, **characterized in that** the second participation confirmation (148) is stored and/or linked in such a way that the second participation confirmation (148) is preferably retrievable and/or representable via a social network (168) and/or via the electronic device (106) and/or via another electronic device (172).

12. The method according to any one of the preceding claims, **characterized in that**, after the second participation confirmation (148) has been stored in the participant detection account (132), the electronic device (106) serves as a proxy reference device (174) and a further electronic device (106a) is detected via the proxy reference device (174), wherein a further participant detection account (132a) is set up and/or opened for the further electronic device (106a) in the detection software (110), a further participant code (134a) is entered, a further digital time stamp signature (140a) is generated, and a further signed participant code (142a) is generated, the method comprising the following steps:
directly coupling (144), in terms of communication, the proxy reference device (174) and the further electronic device (106a);
transmitting the signed participant code (142) and/or a further signed participant code (142a) via the communication coupling (144);
checking the second time stamp signature (140) and the further digital time stamp signature (140a), and comparing whether the participant code (134) and the further participant code (134a) meet the detection requirement (114);
if the comparison is positive, generating a further first participation confirmation (146) and/or a further second participation confirmation (148a); and
storing the first participation confirmation (146a) in the reference detection account (112) and the further second participation confirmation (148a) in the further participant detection account (132).

## Revendications

1. Procédé de détection de présence (100) pour la détection de manière sécurisée de la présence d'un appareil électronique (106) portatif sur le lieu d'un appareil de référence (104), comprenant les étapes :
de première installation d'un logiciel de détection (110) installé sur un serveur (102) sur un appareil de référence (104) et sur un appareil électronique (106) ;
d'activation et/ou d'ouverture d'un compte de détection de référence (112) et d'un compte de détection d'abonné (132) dans le logiciel de détection (110) installé sur le serveur (102) ;
d'un premier établissement d'au moins une exigence de détection (114) pour la détection de l'appareil électronique (106) par le biais de l'appareil de référence (104) et de stockage de l'au moins une exigence de détection (114) sur le serveur (102) ;
d'entrée d'un code de référence (122), par le biais de l'appareil de référence (104), où le code de référence (122) présente un code d'identification (124) attribuable de manière univoque à une personne de référence et/ou à une organisation de référence, d'un premier paramètre d'emplacement (126) de l'appareil de référence (104) détecté par le biais de l'appareil de référence (104) et/ou d'un premier paramètre atmosphérique (152) détecté par le biais de l'appareil de référence (104) ;
d'entrée d'un code d'abonné (134) par le biais de l'appareil électronique (106), où le code d'abonné (134) présente un code d'identification (136) attribuable de manière univoque à une personne abonnée, d'un deuxième paramètre d'emplacement (138) de l'appareil électronique (106) détecté par le biais de l'appareil électronique (106) et/ou d'un deuxième paramètre atmosphérique (154) détecté par le biais de l'appareil électronique (106) ;
de création d'une première signature d'horodatage numérique (128) du code de référence (122) et d'une deuxième signature d'horodatage numérique (140) du code d'abonné (134) ;
d'établissement d'un code de référence signé (130) comprenant le code de référence (122) et la première signature d'horodatage numérique (128), et d'un code d'abonné signé (142) comprenant le code d'abonné (134) et la deuxième signature d'horodatage numérique (140) ;
de couplage (144) direct en communication de l'appareil de référence (104) et de l'appareil électronique (106) et de transmission du code d'abonné signé (142) au moyen de ce couplage (144) direct en communication à l'appareil de référence (104) et/ou de transmission du code de référence signé (130) au moyen de ce couplage (144) en communication à l'appareil électronique (106) ;
de transmission du code de référence signé (130) et du code d'abonné signé (142) au serveur (102) et de stockage du code de référence signé (130) dans le compte de détection de référence (112) et du code d'abonné signé (142) dans le compte de détection d'abonné (132) ; de vérification du code de référence signé (130) et du code d'abonné signé (1422) et de comparaison de l'exigence de détection (114) avec le code de référence (120) et le code d'abonné (134) ;
de création d'une première confirmation d'abonnement (146) et d'une deuxième confirmation d'abonnement (148) lors de la satisfaction à l'exigence de détection (114) par le code de référence (122) et le code d'abonné (134) ;
de stockage de la première confirmation d'abonnement (146) dans le compte de détection de référence (112) et de la deuxième confirmation d'abonnement (148) dans le compte de détection d'abonné (132).

2. Procédé selon la revendication 1, **caractérisé en ce que** l'exigence de détection (114) est mise en place par le biais de l'appareil de référence (104) et/ou le serveur (102).

3. Procédé selon l'une des revendications 1 ou 2, **caractérisé en ce**
**qu'**une caractéristique biométrique de la personne de référence est saisie par le biais de l'appareil de référence (104) et qu'au moins une partie du code de référence (122) présente la caractéristique biométrique de la personne de référence détectée, et/ou
**qu'**une caractéristique biométrique de la personne abonnée est saisie par le biais de l'appareil électronique (106) et qu'au moins une partie du code d'abonné (134) présente la caractéristique biométrique de l'abonné.

4. Procédé selon l'une des revendications précédentes, **caractérisé en ce que** la création de la première signature d'horodatage numérique (128) comprend les étapes :
de création d'une première valeur de hachage (156) par le code de référence (122) ;
de transmission de la première valeur de hachage (156) à un serveur d'horodatage (158) indépendant ;
de détection de l'indication horaire actuelle (160) par le serveur d'horodatage (158) ;
d'établissement d'une première signature (164) de la première valeur de hachage (156) et de l'indication horaire actuelle (160) avec un certificat du serveur d'horodatage (158) indépendant ;
de transmission de la première signature (164) à l'appareil de référence (104) ;
de signature de la première signature (164) avec une première clé privée (166) ;
et/ou
la création de la deuxième signature d'horodatage numérique (140) comprend les étapes :
de création d'une deuxième valeur de hachage par le code d'abonné ;
de transmission de la deuxième valeur de hachage à un serveur d'horodatage indépendant ;
de détection de l'indication horaire actuelle par le serveur d'horodatage ;
d'établissement d'une deuxième signature de la deuxième valeur de hachage et de l'indication horaire actuelle avec un certificat du serveur d'horodatage indépendant ;
de transmission de la deuxième signature à l'appareil électronique ;
de signature de la deuxième signature avec une deuxième clé privée.

5. Procédé selon l'une des revendications précédentes, **caractérisé en ce que**, lors de la transmission du code de référence signé (130), une première clé publique est transmise, et/ou une deuxième clé publique est transmise lors de la transmission du code d'abonné signé (142) pour la vérification respective de la signature.

6. Procédé selon l'une des revendications précédentes, **caractérisé en ce qu'**un intervalle horaire de transmission est fixé pour la transmission du code de référence signé (130) et/ou du code d'abonné signé (142) par le biais du couplage (144) direct en communication, et la transmission du code de référence signé (130) et/ou du code d'abonné signé (142) doit avoir lieu dans cet intervalle horaire de transmission.

7. Procédé selon la revendication 6, **caractérisé en ce que** la définition de l'intervalle horaire de transmission comprend les étapes :
de détection de la vitesse de transmission de données par le biais du couplage (144) direct en communication entre l'appareil de référence (104) et l'appareil électronique (106), et de la vitesse de transmission de données par le biais de la liaison indirecte de communication (108) respective de l'appareil de référence (104) et/ou de l'appareil électronique (106), où la vitesse de transmission de données par le biais du couplage (144) en communication doit être plus rapide que par le biais de la liaison indirecte de communication (108) ;
de définition d'une valeur limite pour la transmission de données, où la valeur limite est inférieure à la vitesse de transmission de données par le biais de la liaison indirecte de communication (108) respective de l'appareil de référence (104) et de l'appareil électronique (106).

8. Procédé selon l'une des revendications précédentes, **caractérisé en ce qu'**un arrangement de couplage est établi pour le couplage de l'appareil de référence (104) et de l'appareil électronique (106), où l'arrangement de couplage est de préférence une secousse commune de l'appareil de référence (104) et de l'appareil électronique (106), et lors d'une détection d'un arrangement de couplage, une confirmation d'arrangement de couplage est transmise au compte de détection de référence (112) et/ou au compte de détection d'abonné (132).

9. Procédé selon l'une des revendications précédentes, **caractérisé en ce que** la première confirmation d'abonnement (146) et/ou la deuxième confirmation d'abonnement (148) sont générées à partir de l'exigence de détection (114), du code de référence (122) et du code d'abonné (134).

10. Procédé selon l'une des revendications précédentes, **caractérisé en ce que** la première confirmation d'abonnement (146) et/ou la deuxième confirmation d'abonnement (148) sont signées de manière numérique.

11. Procédé selon l'une des revendications précédentes, **caractérisé en ce que** la deuxième confirmation d'abonnement (148) est stockée et/ou est créée par un lien de telle manière que la deuxième confirmation d'abonnement (148) peut être activée et/ou représentée de préférence par le biais d'un réseau social (168) et/ou par le biais de l'appareil électronique (106) et/ou par le biais d'un autre appareil électronique (172).

12. Procédé selon l'une des revendications précédentes, **caractérisé en ce qu'**après le stockage de la deuxième confirmation d'abonnement (148) dans le compte de détection d'abonné(132), l'appareil électronique (106) fonctionne en tant qu'appareil de référence proxy (174) et un nouvel appareil électronique (106a) est détecté par l'appareil de référence proxy (174), où un nouveau compte de détection d'abonné (132a) est activé et/ou ouvert pour le nouvel appareil électronique (106a) dans le logiciel de détection (110), un nouveau code d'abonné (134a) est entré, une nouvelle signature d'horodatage numérique (140a) est créée et un nouveau code d'abonné signé (142a) est généré et le procédé comprend les étapes suivantes :
de couplage (144) direct en communication entre l'appareil de référence proxy (174) et le nouvel appareil électronique (106a) ;
de transmission du code d'abonné signé (142) et/ou d'un nouveau code d'abonné signé (142a) par le biais du couplage (144) de communication ;
de vérification de la deuxième signature d'horodatage (140) et de la nouvelle signature d'horodatage numérique (140a) et de comparaison si le code d'abonné (134) et le nouveau code d'abonné (134a) remplissent l'exigence de détection (114) ;
en cas de comparaison positive, de création d'une nouvelle première confirmation d'abonnement (146) et/ou dune nouvelle deuxième confirmation d'abonnement (148a) ;
de stockage de la première confirmation d'abonnement (146a) dans le compte de détection de référence (112) et de la nouvelle deuxième confirmation d'abonnement (148a) dans le nouveau compte de détection d'abonné (132).
